# EUROPEAN PATENT SPECIFICATION

(11) **EP 1 528 496 B1**
(45) Date of publication and mention of the grant of the patent: **23.08.2006**
(21) Application number: 04105422.2
(22) Date of filing: 29.10.2004
(51) Int. Cl.: G06Q 10/00, G08G 1/123

(54) **Mail delivery support system**
System zur Unterstützung von Postlieferungen
Système d'aide de délivrance du courrier

(30) Priority: 31.10.2003 IT TO20030859
(43) Date of publication of application: 04.05.2005
(73) Proprietor: ELSAG SPA, 16154 Genova (IT)
(72) Inventor: De Leo, Guido, 16134, GENOVA (IT); Mainini, Maria Teresa, 16148, GENOVA (IT)
(74) Representative: Jorio, Paolo

(56) References cited:
- EP-A- 1 202 234
- US-A- 5 987 377
- US-A- 6 124 810
- US-A1- 2002 055 818

## Description

The present invention relates to a mail delivery support system. For instance US-5,987,377 describes a support system for determing an expected time of arrival of a vehicle.

As is known, mail is delivered by a carrier, who collects a number of mail items (in particular, packaged items in containers), loads them onto a transport vehicle (e.g. a van), drives the vehicle along a delivery route, and stops at successive delivery points along the route to deliver the mail.

The carrier is therefore required to perform various functions : drive the vehicle, locate the next delivery point to which mail is addressed, sort out and check the mail for delivery, actually deliver the mail, and perform any additional related functions, such as obtaining signatures for registered mail. Such a work load obviously calls for a good deal of care and concentration. To save time, the carrier may overlap certain functions, thus endangering his own safety and that of other road users, or may perform functions in series, which, however, reduces efficiency and causes traffic holdups, particularly in crowded city areas.

It is an object of the present invention to provide a mail delivery support system designed to make the carrier's job easier.

According to the present invention, there is provided a mail delivery support system, as set out in claim 1.

Delivery data is thus transmitted punctually to the carrier, who can concentrate on driving the vehicle, thus greatly increasing his own and other road users' safety. Moreover, since all the essential delivery data (items for delivery, additional functions, delivery routes and points) are supplied directly and automatically by the central station, the carrier no longer wastes time sorting out delivery details, thus greatly improving the reliability and efficiency of the service.

A preferred, non-limiting embodiment of the invention will be described by way of example with reference to the accompanying drawings, in which:
Figure 1 shows, schematically, a mail delivery support system in accordance with the teachings of the present invention;
Figure 2 shows a detail of the Figure 1 system;
Figure 3 shows a flow chart of operations performed by the system according to the present invention.

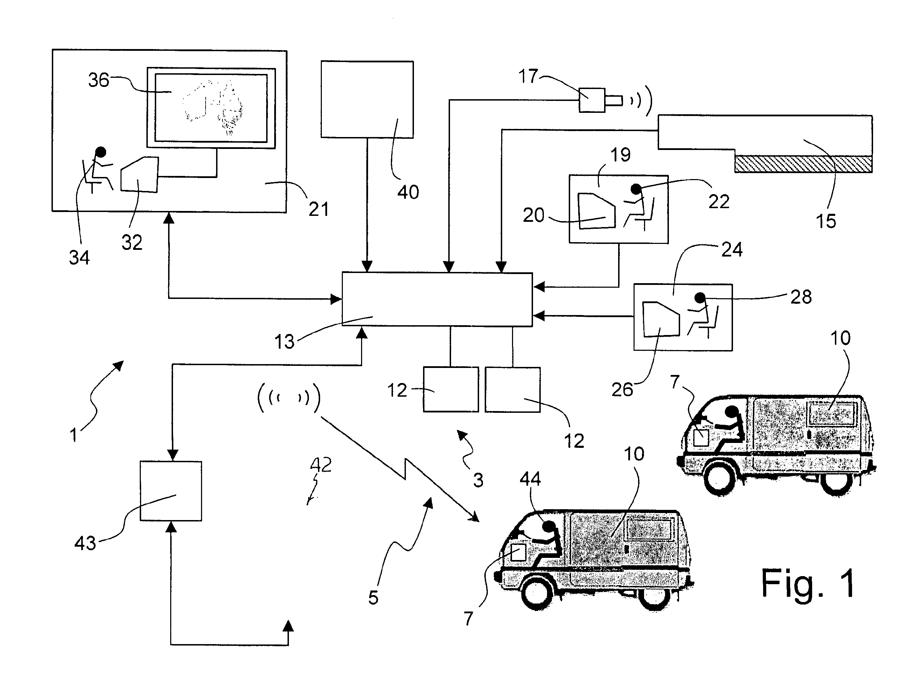

Number 1 in Figure 1 indicates as a whole a mail delivery support system.

System 1 comprises a central station 3 communicating over a telecommunications link, e.g. a two-way radio relay system 5 or cellular telephone technology (e.g. GPRS, GSM, UMTS) link, with a number of peripheral units 7 housed in respective vehicles, in particular vans, 10.

Central station 3 comprises a number of processing units 12 communicating with one another over one or more common data lines (BUSES) 13. Processing units 12 communicate and exchange data with a number of bodies, including:
- a mail sorting system 15 for sorting, for example, ordinary mail and supplying groups of mail items divided according to successive delivery points along a delivery route of a carrier;
- an image acquisition system 17 for acquiring a digital image of the mail items and/or groups of mail items sorted by system 15;
- a route planning system 19, which transmits planning data to data line 13, and in which a computerized unit 20, controlled by one or more planning operators 22, defines one or more of the following:
   - mail delivery routes;
   - approach routes to reach the delivery route and return routes at the end of the delivery route;
   - connecting routes between a mail depot and receiving offices;
   - routes between receiving offices and delivery routes.
- a traffic monitoring system 24, which transmits road traffic data to data line 13, and in which a computerized unit 26, controlled by one or more operators 28, monitors road traffic conditions in the area comprising central station 3 and the mail delivery routes;
- a monitoring system 21, in which a computerized unit 32, controlled by one or more operators 34, supervises operation of central station 3 as a whole - monitoring system 21 is conveniently equipped with wall monitors 36 for displaying information to operator 34;
- a number of external, e.g. traffic information, providers 40 communicating with data line 13.

Provision may also be made to connect common data line 13 to a call centre (not shown) for receiving user service (or service change) requests.

More specifically, route planning system 19 defines delivery routes; for which purpose, system 19 may comprise a tool allowing access by operator 22 to an interface graphically defining a given portion of territory. The tool allows the operator to map out a broken line representing the route and enabling the operator to determine the delivery points and any additional points required to define the route correctly. To each mapped delivery point, the operator assigns the relative postal code and the time taken to reach the delivery point from the previous delivery point. At the end of the above operations, operator 22 may save the route together with a relative code.

Operator 22 may also access statistical load and travel time data relative to a given route or all the routes as a whole. This function provides for determining critical routes, i.e. with an above-average load and/or travel time, and so enables planning operator 22 to determine the nature of the anomaly and work out possible solutions.

Monitoring system 21 provides for monitoring the service and for communicating directly with operators 44 in vehicles 10 to transmit the following information over telecommunications link 5 :
- anomalous situations (e.g. wrong routes, prolonged stops, serious delays with respect to set schedules, etc.); and
- critical traffic situations (heavy traffic, traffic jams, road blocks).

System 21 also responds to problem messages from operators 44 (breakdowns, accidents, sickness, etc.).

Communication may be vocal or by dedicated messages.

Monitor 36 may indicate various information, including:
- location of vehicles 10 along delivery routes;
- traffic conditions in the mail delivery area.

Displaying the location of peripheral units 7 along the delivery routes, by means of colour-coded icons representing the vehicles, is especially useful in determining critical situations (delays, need to communicate with the central station, breakdowns, etc.) and so enabling immediate intervention.

Central station 3 comprises a transmitting-receiving radio station 42 connected by an interface 43 to data line 13 to send/receive digital data packages to and from peripheral units 7. Radio station 42 also ensures two-way sound connection between operators 22, 28, 34 at central station 3 and operators 44 in vehicles 10. Obviously, in the event telecommunications link 5 is based on cellular telephone (GSM, GPRS, UMTS) technology, the radio station is replaced with the appropriate (known) equipment.

Sorting system 15 typically comprises a number of sorting units (not shown) for sorting mail of one or more types, and, by means of image acquisition system 17, also supplies digital images of the sequenced outgoing mail.

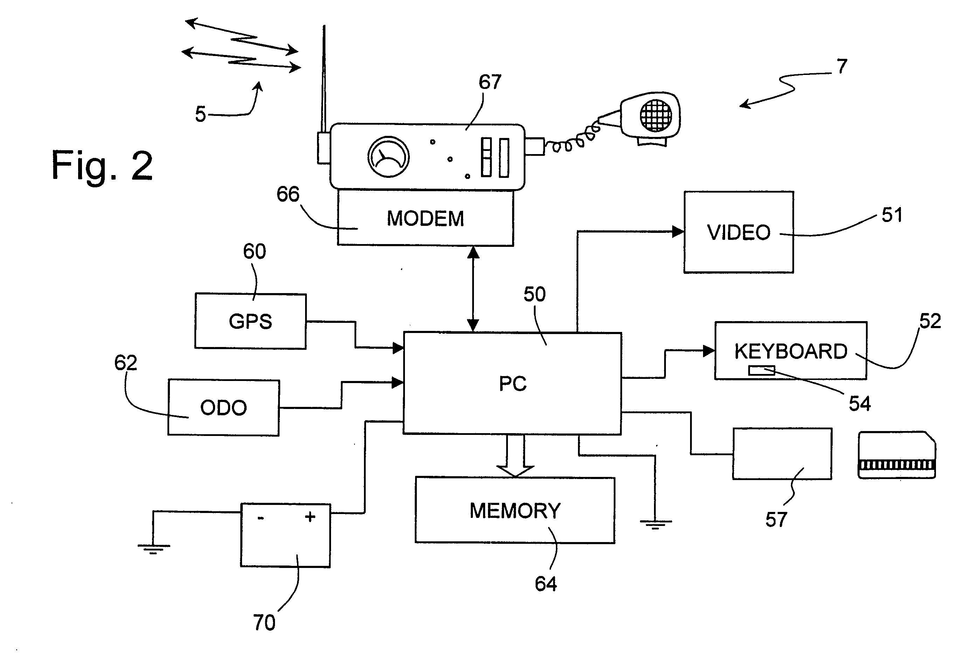

Figure 2 shows a detail of a peripheral unit 7.

Peripheral unit 7 comprises a central processing unit conveniently defined by a particularly robust personal computer 50 with a video terminal 51 (e.g. a backlighted liquid-crystal colour video) and an alphanumeric keyboard 52, which may conveniently comprise a buzzer 54 and predetermined function keys.

Central unit 50 is connected over a serial line to a magnetic or smart card reader or biometric scanner 57 used as explained later on.

Central unit 50 is also connected over respective serial lines to a GPS unit 60 and optional odometer 62, and has an expanded (e.g. optical-media-based) memory 64 storing a number of digital maps.

Central unit 50 may communicate with a cellular telephone (GSM, GPRS, UMTS) system to integrate data and voice communication.

Data connection to the radio communication medium (radio relay or cellular telephone system) is by a modem 66 connected over a serial line to personal computer 50 and cooperating with a transmitting-receiving device 67.

Transmitting-receiving device 67 also provides for two-way sound connection to central station 3.

Peripheral unit 7 may be powered by the battery 70 of vehicle 10.

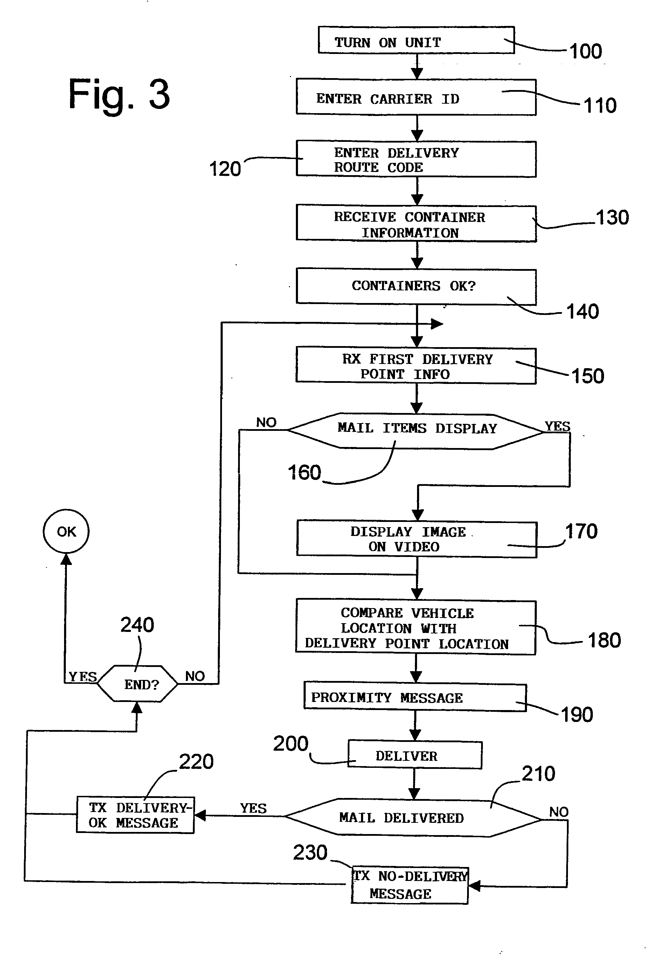

The operations performed by peripheral units 7 of system 1 will be described with particular reference to Figure 3.

When peripheral unit 7 is turned on (block 100), a block 110 waits for identification of the user 44 (hereinafter referred to as the carrier). Such identification is acquired automatically by reading the biometric characteristics of the carrier or a magnetic or smart card inserted by carrier 44 into card reader 57. Block 110 is followed by a block 120, which waits for an alphanumeric code indicating a specific delivery route assigned to carrier 44. When the route code is entered correctly by carrier 44, block 120 goes on to a block 130.

Block 130 is supplied over telecommunications link 5 with information about the mail items to be delivered along the specific route selected in block 120; which information has been generated by sorting system 15 and transmitted to data line 13, where it has been processed by monitoring system 21.

More specifically, block 130 receives information about the number and characteristics of the containers containing the mail items to be delivered along the route of that particular carrier; which information is stored in the buffer memory of personal computer 50 and displayed on video 51.

Block 130 is followed by a block 140, which waits for a manual command (e.g. entered on keyboard 52) by carrier 44 confirming the container information on video 51 corresponds with the actual containers in vehicle 10.

On receiving confirmation, block 140 goes on to a block 150, which is supplied over telecommunications link 5 with information about the first delivery point to which one or more mail items are to be delivered. This information has been generated in central station 3 by combining the information from sorting system 15 with the information generated by route planning system 19, and may be displayed on video 51, e.g. by a digital map graphically showing the delivery route, the area surrounding the delivery route, and the delivery point along the route. Block 150 also supplies information about the number and type of mail items to be delivered at the next delivery point.

Block 150 is followed by a block 160, which may request display of an image of the mail items for delivery.

If so, block 160 is followed by a block 170, which shows carrier 44 a digital image on the video (in background mode) of the mail item/s for delivery at the next delivery point.

The image, acquired by image acquisition system 17, has been transmitted over telecommunications link 5. Block 170 and block 160 (if no image is requested or available) are followed by a block 180, which compares the location of vehicle 10 (detected by GPS 60 and optional odometer 62) with the location of the next delivery point to determine approach of vehicle 10 to the delivery point.

Mail display may be conducted differently from the method described with reference to blocks 160 and 170, e.g. by initially entering (e.g. when personal computer 50 is turned on) various options, such as:
- permanent background display of mail image;
- display mail image by request.

The display itself may be executed in various ways, including:
- background image display with superimposed delivery point information in text form;
- alternative image and text-form information display;
- cyclic function key selection: text only/image only/superimposed.

Provision may also be made for displaying more than one next delivery point, e.g. the next two or three, to give the carrier a wider picture of the next deliveries.

When the distance between the detected vehicle location and the location of the next delivery point is below a given threshold, block 180 goes on to a block 190, which activates an audio-visual message (e.g. a message displayed on video 51 and accompanied by sounding buzzer 54) to alert carrier 44 of arrival at the next delivery point. Block 190 is followed by a standby block 200, which awaits actual delivery of the mail item/s at the delivery point reached.

Block 200 is followed by a block 210, which waits for a manual command by carrier 44 confirming delivery.

Block 210 may interpret carrier 44 pulling away from the delivery point as a signal confirming delivery.

Block 210, requested at the initial configuration stage, may even be eliminated.

Carrier 44 may enter a command confirming delivery on keyboard 52; in which case, block 210 goes on to a block 220, which transmits a mail delivery confirmation message over telecommunications link 5 to central station 3, which, in response to the message, transmits information relative to the mail item/s to be delivered at the next delivery point.

Carrier 44 may even enter a no-delivery command on keyboard 52; in which case, block 210 goes on to a block 230, which memorizes and/or transmits a no-delivery message (over radio relay system 5) to central station 3, which, in response to the message, logs the non-delivery and supplies information relative to the mail items/s to be delivered at the next delivery point.

Both blocks 220 and 230 are followed by a block 240, which waits for an end-of-delivery information which terminates the operating sequence; conversely, block 240 goes back to block 150.

In actual use, when coming on duty, carrier 44 first identifies himself (block 110) and selects the route to be worked (block 120) by pressing a delivery-round-start function key and either inserting a badge, defined by a magnetic, proximity, or smart card, into reader 57 or undergoing a biometric scan. Once this is done, the system requests carrier 44 to enter the route code defined by a sequence of alphanumeric keys.

In response to the route code, the system transmits and displays a list of the containers assigned to that particular route (block 130); and, after checking the list corresponds to what is actually loaded on the vehicle (block 140), carrier 44 enters a confirm message.

By pressing a given function key (block 160), carrier 44 may also request a background image of the mail items in the containers to assist in checking the load.

As stated, carrier 44 may also choose between "request/background/multiple" display modes.

Once the container list is checked, the system transmits the first address (block 150) to carrier 44, with the number and type of items for delivery in the foreground, and a background image of the bundle for delivery.

On approaching the delivery point (blocks 180 and 190), the carrier is informed on the next delivery point.

Once the mail is delivered, carrier 44 confirms delivery by pressing a given key or by simply pulling away from the delivery point.

At this point, the system indicates the next delivery point, and operation continues in the same way until all the mail is delivered.

Any system-detected delays with respect to schedule are shown on the screen.

On completing the round, the carrier reports to the system the end of the round; this operation disables the terminal until it is activated again.

Some of the mail items through system 15 may call for manual processing and therefore be out of sequence; in which case, central station 3 signals the presence of manually sequenced or unaddressed items, i.e. items to be delivered indiscriminately to all delivery points.

Central station 3 may also transmit additional information to peripheral units 7, e.g. relating to additional functions to be performed at given delivery points.

Such information may include, for example :
- delivering registered/insured mail which must be signed for;
- delivering mail to be paid for on delivery by the user; and
- picking up mail at the user.

The advantages of the system according to the present invention will be clear from the foregoing description. In particular, the system provides for:
- on-round assistance of carriers, by supplying information relative to the delivery and duties to be executed, delivery routes, and delivery points along the routes;
- integrating mail delivery with the sorting process to enable use of information available at the sorting stage;
- automatically defining delivery routes, and downloading the relative delivery data automatically to the vehicles;
- providing the carrier with an assigned container list, which can be checked against the containers actually loaded on the vehicle;
- information gathering concerning delivery, thus enabling the carrier to report immediately any problems preventing delivery;
- round monitoring from a central station, by monitoring vehicle locations and delivery progress;
- delivery time statistics gathering, so that delivery points can be redistributed evenly over new routes according to available resources.

What is more, the delivery support system according to the present invention performs the above functions with no need for additional mail delivery coding (system 1 provides, for example, for sorting ordinary mail).

Clearly, changes may be made to the system as described herein without, however, departing from the scope of the present invention.

For example, telecommunications link 5 may be replaced by a direct link for full data transfer to peripheral units 7 in a data loading step.

The direct link may be made in various ways, including:
- direct cable link;
- short-range radio link, e.g. infrared-ray or public-frequency link (Wireless, Ethernet std IEEE 802,11, Blue Tooth, etc.).

In this case, there would be no on-round data flow from peripheral units 7 to central station 3, e.g. to permit location of the peripheral units. The potential of such a system is obviously reduced, by permitting no on-line interaction between carrier 44 and central station 3. Information concerning the mail to be delivered is still made available to carriers, by being downloaded to peripheral units 7; and information concerning delivery may be downloaded from peripheral units 7 to central station 3 over a subsequent direct link (e.g. cable or short-range radio link) upon return of carrier 44 to central station 3 at the end of the round.

## Claims

1. A mail delivery support system, comprising:
- at least one central station (3) communicating and exchanging data with a mail sorting system (15);
- a number of mobile peripheral units (7), in particular, peripheral units housable in respective vehicles (10) ; and
- a link (5) connecting said central station (3) to said peripheral units;
each peripheral unit having a central processing unit (50) receiving data transmitted by the central station over said link (5), and processing and video display means (51, 150) for supplying a user (44) with information about a number of successive delivery points along a delivery route for mail item(s) processed by said mail sorting system (15), the system further comprising transmitting digital images of said mail items, aquired by an acquisition system (17) of said mail sorting system, over said link (5)
wherein said video display means (51) upon selection (160) by the user displays said digital image of the mail item(s) for delivery.

2. A system as claimed in Claim 1, wherein said link is a telecommunications link.

3. A system as claimed in Claim 2, wherein said telecommunications link comprises one of the following communication means:
- a two-way radio relay system (5);
- a cellular telephone technology (e.g. GPRS, GSM, UMTS) link.

4. A system as claimed in Claim 2, wherein said central processing unit (50) comprises route selecting means (120, 130) which respond to a user command, and which, following data exchange with the central station over said telecommunications link (5), supply (130) information concerning the mail to be delivered along the specific route selected by the user.

5. A system as claimed in Claim 4, wherein said route selecting means (120, 130) supply the user with information concerning the number and characteristics of the containers containing the mail to be delivered along the selected delivery route.

6. A system as claimed in Claim 4, wherein said route selecting means (120, 130) are followed by confirmation standby means (140), which await a user command issued when the container information supplied to the user (44) matches the actual characteristics of the containers physically assigned to the user.

7. A system as claimed in Claim 1, wherein said processing and video display means (51, 150) supply a graphic display of said delivery route, of the area surrounding the delivery route, and of the delivery points along the delivery route.

8. A system as claimed in Claim 1, wherein additional-user-function display means are provided, which exchange data with said central station, and display one or more of the following on said processing and video display means (51, 150):
- information concerning mail not sorted in the usual manner;
- information concerning registered/insured mail requiring a receipt;
- information concerning mail to be paid for on delivery;
- information concerning mail to be picked up at a delivery point.

9. A system as claimed in Claim 1, wherein positioning means (180, 190) are provided, which compare the detected location of said peripheral unit with the location of the current delivery point; said positioning means (180, 190) emitting proximity messages when the detected location of the peripheral unit approaches the location of the current delivery point.

10. A system as claimed in Claim 1, wherein delivery confirmation means (210, 220) are provided, which respond to a mail-delivered signal; said delivery confirmation means (210, 220) supervising storage or transmission to the central station (3), over the telecommunications link (5), of a mail-delivered message; said central station (3) responding to said mail-delivered message by supplying information concerning the mail item/s to be delivered to the next delivery point.

11. A system as claimed in Claim 2, wherein said central station comprises a route planning system (19), wherein a computerized unit (20), controlled by an operator (22), defines one or more of the following:
- mail delivery routes;
- approach routes to reach the delivery route and return routes at the end of the delivery route;
- connecting routes between a mail depot and receiving offices;
- routes between receiving offices and delivery routes.

12. A system as claimed in Claim 2, wherein said central station comprises a link to a traffic monitoring system (24), in which a computerized unit (26), controlled by an operator (28), monitors road traffic conditions in the area comprising mail delivery routes.

13. A system as claimed in Claim 2, wherein said central station comprises a monitoring system (21), in which a computerized unit (32), controlled by an operator (34), supervises operation of the central station (3).

14. A system as claimed in Claim 2, wherein said central processing unit (50) cooperates with positioning means (60, 62) for determining the location of the peripheral units (7) within a given area; said central processing unit (50) operating and exchanging data, over said telecommunications link (5), with said central station (3) to supply, at said central station (3), information concerning the location of said peripheral units (7) along at least one delivery route.

15. A system as claimed in Claim 1, wherein said sorting system (15) sorts ordinary mail.

## Patentansprüche

1. System zur Unterstützung von Postlieferungen mit:
wenigstens einer Zentralstation (3), die mit einem Postsortiersystem (15) kommuniziert und Daten austauscht;
einer Anzahl mobiler Datenendgeräte (7), insbesondere Datenendgeräte, die in entsprechenden Fahrzeugen (10) untergebracht werden können; und
einer Verbindung (5), die die Zentralstation (3) mit den Datenendgeräten verbindet;
wobei jedes Datenendgerät eine zentrale Rechnereinheit (50) aufweist, die Daten empfängt, die von der Zentralstation über die Verbindung (5) übertragen werden, sowie Bearbeitungs- und Videoanzeigeeinrichtungen (51, 150), um einem Benutzer (44) Informationen über die Anzahl nacheinander folgender Lieferstellen entlang einer Lieferroute für ein Poststück/Poststücke, das/die von dem Postsortiersystem (15) bearbeitet wurde/wurden, zur Verfügung zu stellen,
wobei das System des Weiteren das Übertragen digitaler Bilder der Poststücke, die von einem Aufnahmesystem (17) des Postsortiersystems aufgenommen wurden, über die Verbindung (5) umfasst.

2. System nach Anspruch 1, wobei die Verbindung eine Telekommunikationsverbindung ist.

3. System nach Anspruch 2, wobei die Telekommunikationsverbindung eine der folgenden Kommunikationseinrichtungen aufweist:
- eine Zwei-Wege-Richtfunkanlage (5);
- eine Mobiltelefon-Technik (z.B. GRPS, GSM, UMTS)-Verbindung.

4. System nach Anspruch 2, wobei die zentrale Rechnereinheit (50) Routenauswähleinrichtungen (120, 130) aufweist, die auf einen Benutzerbefehl ansprechen, und die nach Datenaustausch mit der Zentralstation über die Telekommunikationsverbindung (5) Informationen über die entlang der von dem Benutzer gewählten bestimmten Route auszuliefernden Post zur Verfügung stellen.

5. System nach Anspruch 4, wobei die Routeriauswähleinrichtungen (120, 130) den Benutzer mit Informationen hinsichtlich der Anzahl und der Eigenschaften der Behälter, die die entlang der ausgewählten Lieferroute auszuliefernde Post enthalten, versorgt.

6. System nach Anspruch 4, wobei auf die Routenauswähleinrichtungen (120, 130) eine Bestätigungs-Standby-Einrichtung (140) folgt, die einen Benutzerbefehl erwartet, der ausgegeben wird, wenn die dem Benutzer (44) zur Verfügung gestellten Behälter-Informationen mit den tatsächlichen Eigenschaften der Behälter, die dem Benutzer physisch zugeteilt worden sind, übereinstimmen.

7. System nach Anspruch 1, wobei die Bearbeitungs- und Videoanzeigeeinrichtungen (51, 150) eine graphische Anzeige der Lieferroute, des die Lieferroute umgebenden Gebiets und der Lieferstellen entlang der Lieferroute zur Verfügung stellen.

8. System nach Anspruch 1, wobei Anzeigeeinrichtungen für zusätzliche Benutzerfunktionen vorgesehen sind, die Daten mit der Zentralstation austauschen und eines oder mehrere des Folgenden auf den Bearbeitungs- und Videoanzeigeeinrichtungen (51, 150) anzeigen:
- Informationen über Post, die nicht in der üblichen Art und Weise sortiert worden ist;
- Informationen über eingeschriebene/versicherte Post, die eine Empfangsbestätigung erfordert;
- Informationen über Post, die bei Lieferung zu bezahlen ist;
- Informationen über Post, die an einer Lieferstelle abzuholen ist.

9. System nach Anspruch 1, wobei Positionierungseinrichtungen (180, 190) vorgesehen sind, die die von dem Datenendgerät ermittelte Lage mit der Lage der tatsächlichen Lieferstelle vergleichen, wobei die Positionierungseinrichtungen (180, 190) Nachrichten über die Nähe aussenden, wenn die von dem Datenendgerät ermittelte Lage sich der Lage der tatsächlichen Lieferstelle annähert.

10. System nach Anspruch 1, wobei Lieferbestätigungs-Einrichtungen (210, 220) vorgesehen sind, die auf ein Postzustellsignal ansprechen, wobei die Lieferbestätigungs-Einrichtungen (210, 220) das Speichern oder die Übertragung einer Postzustellnachricht über die Telekommunikationsverbindung (5) an die Zentralstation (3) überwachen, wobei die Zentralstation (3) auf die Postzustellnachricht antwortet, indem sie Informationen über das (die) an die nächste Lieferstelle auszuliefernde Poststück(e) zur Verfügung stellt.

11. System nach Anspruch 2, wobei die Zentralstation ein Routenplansystem (19) aufweist, wobei eine Computereinheit (20), die von einem Bediener (22) gesteuert wird, eines oder mehrere des Folgenden definiert:
- Postlieferrouten;
- Annäherungsrouten, um die Lieferroute zu erreichen, und Rückkehrrouten am Ende der Lieferroute;
- Verbindungsrouten zwischen einem Postdepot und Empfangsbüros;
- Routen zwischen Empfangsbüros und Lieferrouten.

12. System nach Anspruch 2, wobei die Zentralstation eine Verbindung mit einem Verkehrsüberwachungssystem (24) aufweist, in dem eine Computereinheit (26), die von einem Bediener (28) gesteuert wird, die Straßenverkehrsbedingungen in dem Gebiet, in dem sich Postlieferrouten befinden, überwacht.

13. System nach Anspruch 2, wobei die Zentralstation ein Überwachungssystem (21) aufweist, in dem eine Computereinheit (32), die von einem Bediener (34) gesteuert wird, den Betrieb der Zentralstation (3) überwacht.

14. System nach Anspruch 2, wobei die zentrale Verarbeitungseinheit (50) mit Positionierungseinrichtungen (60, 62) zusammenarbeitet, um die Lage der Datenendgeräte (7) innerhalb eines gegebenen Bereichs zu ermitteln, wobei die zentrale Verarbeitungseinheit (50) Daten bearbeitet und über die Telekommunikationsverbindung (5) mit der Zentralstation (3) austauscht, um an der Zentralstation (3) Informationen über die Lage der Datenendgeräte (7) entlang wenigstens einer Lieferroute zur Verfügung zu stellen.

15. System nach Anspruch 1, wobei das Sortiersystem (15) normale Post sortiert.

## Revendications

1. Système de support de distribution de courrier, comportant :
- au moins un poste central (3) communiquant et échangeant des données avec un système de tri de courrier (15);
- plusieurs unités périphériques mobiles (7), en particulier des unités périphériques pouvant être reçues dans des véhicules respectifs (10) ; et
- une liaison (5) connectant ledit poste central (3) auxdites unités périphériques ;
- chaque unité périphérique ayant une unité de traitement centrale (50) recevant des données transmises par le poste central sur ladite liaison (5), et des moyens de traitement et d'affichage vidéo (51, 150) pour fournir à un utilisateur (44) des informations concernant un nombre de points de distribution successifs le long d'un trajet de distribution pour des éléments de courrier traités par ledit système de tri de courrier (15), le système comportant en outre une transmission d'images numériques desdits éléments de courrier, acquises par un système d'acquisition (17) dudit système de tri de courrier, sur ladite liaison (5), dans lequel lesdits moyens d'affichage vidéo (51), lors d'une sélection (160) par l'utilisateur, affichent ladite image numérique du ou des éléments de courrier à distribuer.

2. Système selon la revendication 1, dans lequel ladite liaison est une liaison de télécommunications.

3. Système selon la revendication 2, dans lequel ladite liaison de télécommunications comporte un des moyens de communication suivants :
- un système de relais radio bidirectionnel(5) ;
- une liaison de technologie de téléphone cellulaire (par exemple GPRS, GSM, UMTS).

4. Système selon la revendication 2, dans lequel ladite unité de traitement centrale (50) comporte des moyens de sélection de trajet (120, 130) qui répondent à une instruction d'utilisateur, et qui, à la suite d'un échange de données avec le poste central sur ladite liaison de télécommunications (5), fournissent (130) des informations concernant le courrier à distribuer le long du trajet spécifique sélectionné par l'utilisateur.

5. Système selon la revendication 4, dans lequel lesdits moyens de sélection de trajet (120, 130) fournissent à l'utilisateur des informations concernant le nombre et les caractéristiques des conteneurs contenant le courrier à distribuer le long du trajet de distribution sélectionné.

6. Système selon la revendication 4, dans lequel lesdits moyens de sélection de trajet (120, 130) sont suivis par des moyens d'attente de confirmation (140), qui attendent une instruction d'utilisateur délivrée lorsque les informations de conteneurs fournies à l'utilisateur (44) correspondent aux caractéristiques effectives des conteneurs attribués physiquement à l'utilisateur.

7. Système selon la revendication 1, dans lequel lesdits moyens de traitement et d'affichage vidéo (51, 150) fournissent un affichage graphique dudit trajet de distribution, de la zone entourant le trajet de distribution, et des points de distribution le long du trajet de distribution.

8. Système selon la revendication 1, dans lequel des moyens d'affichage de fonction d'utilisateur supplémentaires sont fournis, qui échangent des données avec ledit poste central, et affichent un ou plusieurs des éléments suivants sur lesdits moyens de traitement et d'affichage vidéo (51, 150) :
- des informations concernant du courrier non trié de la manière habituelle ;
- des informations concernant du courrier recommandé/certifié nécessitant un accusé de réception ;
- des informations concernant du courrier devant être payé lors de la distribution ;
- des informations concernant du courrier devant être pris au point de distribution.

9. Système selon la revendication 1, dans lequel des moyens de positionnement (180, 190) sont fournis, qui comparent l'emplacement détecté de ladite unité périphérique avec l'emplacement du point de distribution en cours ; lesdits moyens de positionnement (180, 190) émettant des messages de proximité lorsque l'emplacement détecté de l'unité périphérique approche de l'emplacement du point de distribution en cours.

10. Système selon la revendication 1, dans lequel des moyens de confirmation de distribution (210, 220) sont fournis, qui répondent à un signal de courrier distribué ; lesdits moyens de confirmation de distribution (210, 220) supervisant une mémorisation ou une transmission vers le poste central (3),sur la liaison de télécommunications (5), d'un message de courrier distribué ; ledit poste central (3) répondant audit message de courrier distribué en fournissant des informations concernant le ou les éléments de courrier à distribuer vers le point de distribution suivant.

11. Système selon la revendication 2, dans lequel ledit poste central comporte un système de planification de trajet (19), dans lequel une unité informatisée (20), commandée par un opérateur (22), définit un ou plusieurs des éléments suivants :
- des trajets de distribution de courrier ;
- des trajets d'approche pour atteindre le trajet de distribution et des trajets de retour à la fin du trajet de distribution ;
- des trajets de liaison entre un dépôt de courrier et des bureaux de réception ;
- des trajets entre les bureaux de réception et des trajets de distribution.

12. Système selon la revendication 2, dans lequel ledit poste central comporte une liaison à un système de surveillance de circulation (24), dans lequel une unité informatisée (26), commandée par un opérateur (28), surveille les conditions de circulation routière dans la zone comportant les trajets de distribution de courrier.

13. Système selon la revendication 2, dans lequel ledit poste central comporte un système de surveillance (21), dans lequel une unité informatisée (32), commandée par un opérateur (34), supervise un fonctionnement du poste central (3).

14. Système selon la revendication 2, dans lequel ladite unité de traitement centrale (50) coopère avec des moyens de positionnement (60, 62) pour déterminer l'emplacement des unités périphériques (7) dans une zone donnée ; ladite unité de traitement centrale (50) fonctionnant et échangeant des données, sur ladite liaison de télécommunications (5), avec ledit poste central (3) pour fournir, au niveau dudit poste central (3), des informations concernant l'emplacement desdites unités périphériques (7) le long d'au moins un trajet de distribution.

15. Système selon la revendication 1, dans lequel ledit système de tri (15) trie du courrier ordinaire.
